(19) Europäisches Patentamt
European Patent Office
Office européen des brevets

(11) EP 2 833 018 B1

(12) EUROPÄISCHE PATENTSCHRIFT

(45) Veröffentlichungstag und Bekanntmachung des Hinweises auf die Patenterteilung:
**28.06.2017 Patentblatt 2017/26**

(51) Int Cl.:
***F16F 15/14*** *(2006.01)*

(21) Anmeldenummer: **14178302.7**

(22) Anmeldetag: **24.07.2014**

(54) **Fliehkraftpendel und Antriebssystem mit Fliehkraftpendel**

Centrifugal force pendulum and drive system having centrifugal force pendulum

Pendule centrifuge et système d'entraînement doté d'une pendule centrifuge

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2013 DE 102013214812**

(43) Veröffentlichungstag der Anmeldung:
**04.02.2015 Patentblatt 2015/06**

(73) Patentinhaber: **Schaeffler Technologies AG & Co. KG**
**91074 Herzogenaurach (DE)**

(72) Erfinder: **Schnädelbach, David**
**76534 Baden-Baden-Neuweier (DE)**

(56) Entgegenhaltungen:
WO-A1-2012/079557      DE-A1-102009 052 055
DE-A1-102010 049 930    DE-A1-102012 204 222
DE-A1-102012 219 959

## Beschreibung

Die Erfindung betrifft ein Fliehkraftpendel und ein Antriebssystem mit solch einem Fliehkraftpendel, wobei das Fliehkraftpendel eine erste Pendelmasse, eine zweite Pendelmasse und einen Pendelflansch umfasst, wobei Pendelflansch mit der Verbrennungsmaschine koppelbar ist, wobei die erste Pendelmasse und die zweite Pendelmasse an dem Pendelflansch zur Durchführung einer vordefinierten Pendelbewegung beweglich mit dem Pendelflansch gekoppelt sind.

Aus DE 10 2009 042 825 A1 ist eine Drehmomentübertragungseinrichtung mit einem Fliehkraftpendel bekannt. Das Fliehkraftpendel umfasst einen Pendelflansch, an dem beidseitig auf unterschiedlichen Seiten des Flanschs Pendelmassen angeordnet sind, die über einen Bolzen miteinander verbunden sind. Das Fliehkraftpendel ist dabei ein Schwingungssystem, das auf eine vorbestimmte Erregerordnung abgestimmt ist. Die Tilgung von Torsionsschwingungen ist im Bereich der Erregerordnung besonders stark und fällt in Richtung höherer und niedriger Frequenzen der Torsionsschwingungen ab.

Im Rahmen der Kraftstoffreduzierung von Verbrennungsmaschinen werden, insbesondere bei Motoren mit höherer Zylinderzahl, einzelne Zylinder oder ganze Zylinderbänke abgeschaltet. Beim Abschalten wird nur noch ein Teil der Zylinder zum Antrieb des Fahrzeuges mit Kraftstoff versorgt. Durch das Abschalten von Zylindern ändert sich das Torsionsschwingungsverhalten der Verbrennungsmaschine. Die DE 10 2009 052 055 A1 und die DE10 2012 219 959 A1 schlagen hierzu Fliehkraftpendel für unterschiedliche Anregungen vor.

Es ist Aufgabe der Erfindung, ein verbessertes Fliehkraftpendel bzw. ein verbessertes Antriebssystem einer Verbrennungsmaschine und einem Fliehkraftpendel bereitzustellen.

Diese Aufgabe wird mittels eines Fliehkraftpendels gemäß Patentanspruch 1 gelöst. Vorteilhafte Ausführungsformen sind in den abhängigen Ansprüchen angegeben.

Erfindungsgemäß wurde erkannt, dass ein verbessertes Fliehkraftpendel zur Dämpfung einer Torsionsschwingung einer Verbrennungsmaschine dadurch bereitgestellt werden kann, dass das Fliehkraftpendel eine erste Pendelmasse, eine zweite Pendelmasse und einen Pendelflansch umfasst. Der Pendelflansch ist mit der Verbrennungsmaschine koppelbar. Die erste Pendelmasse und die zweite Pendelmasse sind zur Durchführung einer vordefinierten Pendelbewegung beweglich mit dem Pendelflansch gekoppelt. Die erste Pendelmasse ist unterschiedlich zu der zweiten Pendelmasse ausgebildet. Die erste Pendelmasse ist ausgebildet, eine in den Pendelflansch einleitbare erste Erregerordnung der Verbrennungsmaschine zu dämpfen. Die zweite Pendelmasse ist ausgebildet, eine in den Pendelflansch einleitbare zweite Erregerordnung der Verbrennungsmaschine zu dämpfen. Die beiden Erregerordnungen sind unterschiedlich. Auf diese Weise können mehrere Erregerordnungen bei Dreh- bzw. Torsionsschwingungen durch das Fliehkraftpendel gedämpft werden, so dass bei einem Antriebsstrang mit einer Verbrennungsmaschine -und einem derartigen Fliehkraftpendel das im Antriebsstrang vorherrschende Drehmoment besonders schwingungsarm ist. Dadurch kann ein besonders leises Antriebssystem mit einem hohen Fahrkomfort bereitgestellt werden.

In einer weiteren Ausführungsform ist ein erstes Führungsmittel vorgesehen, das mit der ersten Pendelmasse verbunden ist. Das erste Führungsmittel ist ausgebildet, die erste Pendelmasse in einer Pendelbewegung zu führen und einen Pendelbereich der ersten Pendelmasse zu begrenzen. Ferner ist ein zweites Führungsmittel vorgesehen, das mit der zweiten Pendelmasse verbunden ist. Das zweite Führungsmittel ist ausgebildet, die zweite Pendelmasse in der Pendelbewegung zu führen und einen Pendelbereich der zweiten Pendelmasse zu begrenzen. Der Pendelbereich der ersten Pendelmasse überlappt mit dem Pendelbereich der zweiten Pendelmasse. Dadurch kann ein besonders kompaktes Fliehkraftpendel bereitgestellt werden. Alternativ kann der Pendelbereich der ersten Pendelmasse, vorzugsweise in Umfangsrichtung, beabstandet zu dem Pendelbereich der zweiten Pendelmasse angeordnet sein. Auf diese Weise wird ein Aneinanderschlagen der beiden Pendelmassen vermieden, so dass das Fliehkraftpendel besonders leise im Betrieb ist.

In einer weiteren Ausführungsform weist die erste Pendelmasse eine Ausnehmung auf, wobei die Ausnehmung auf einer der zweiten Pendelmasse zugeordneten Seite der ersten Pendelmasse angeordnet ist. Die Ausnehmung ist ausgebildet, die zweite Pendelmasse zumindest teilweise aufzunehmen. Auf diese Weise können die Pendelbereiche der beiden Pendelmassen überlappend angeordnet sein und kann gleichzeitig zuverlässig ein Aneinanderschlagen der Pendelmassen vermieden werden. Ferner ermöglicht diese Ausgestaltung, die beiden Pendelmassen definiert auf die jeweils korrespondierenden Erregerordnungen der beiden Pendelmassen abzustimmen. Dadurch kann das Fliehkraftpendel ein besonders gutes Betriebsverhalten aufweisen.

In einer weiteren Ausführungsform weist die erste Pendelmasse eine erste umfangsseitige Erstreckung auf. Die zweite Pendelmasse weist eine zweite umfangsseitige Erstreckung auf. Die erste Erstreckung der ersten Pendelmasse ist dabei unterschiedlich zu der zweiten Erstreckung der zweiten Pendelmasse. Bei identischer axialer Breite und radialer Erstreckung weisen somit die Pendelmassen unterschiedliche Massen auf. Aufgrund der unterschiedlichen Massen können die beiden Pendelmassen auf unterschiedliche Tilgerordnungen abgestimmt werden, sodass die Pendelmassen besonders effektiv wirken. Durch die unterschiedlichen Massen können besonders einfach Erregerordnungen niedriger Ordnung und Erregerordnungen hoher Ordnung effektiv gedämpft werden.

Besonders vorteilhaft ist, wenn eine Masse der ersten Pendelmasse unterschiedlich zu einer Masse der zweiten Pendelmasse ist.

In Versuchen hat sich als besonders vorteilhaft herausgestellt, wenn ein Verhältnis der Masse der ersten Pendelmasse zu der Masse der zweiten Pendelmasse größer 1 ist. Besonders vorteilhaft ist, wenn das Verhältnis 1,2 bis 3, insbesondere 1,5 bis 2,5, besonders vorteilhafterweise 1,7 bis 2,3, oder besonders vorteilhafterweise 2 ist. Durch das Verhältnis der Massen kann effizient auf die Zylinderabschaltung das Fliehkraftpendel abgestimmt werden und so die Drehmomentschwingung der Verbrennungsmaschine sowohl im Normalbetrieb als auch mit Zylinderabschaltung effizient dämpfen. Das Verhältnis orientiert sich dabei an der Gesamtzylinderanzahl der Verbrennungsmaschinen zu der Gesamtzylinderanzahl abzüglich der abgeschalteten Zylinder.

In einer weiteren Ausführungsform ist eine Erstreckung der ersten Pendelmasse in Umfangsrichtung und/oder in axialer Richtung unterschiedlich zu einer Erstreckung der zweiten Pendelmasse in Umfangsrichtung und/oder in axialer Richtung. Auch auf diese Weise können die Massen der beiden Pendelmassen variiert werden, um das Fliehkraftpendel auf unterschiedliche Tilgerordnungen abzustimmen.

Besonders vorteilhaft ist hierbei, wenn das Verhältnis der Erstreckung der ersten Pendelmasse in Umfangsrichtung und/oder in axialer Richtung zu der Erstreckung der zweiten Pendelmasse in Umfangsrichtung und/oder in axialer Richtung größer 1 ist. Besonders vorteilhaft ist hierbei, wenn das Verhältnis 1,2 bis 3, insbesondere vorzugsweise 1,5 bis 2,5, besonders vorteilhafterweise 1,7 bis 2,3, insbesondere besonders vorzugsweise 2, ist.

Die Aufgabe der Erfindung wird aber auch durch ein Antriebssystem gemäß Patentanspruch 9 gelöst.

Erfindungsgemäß wurde erkannt, dass ein verbessertes Antriebssystem für ein Kraftfahrzeug dadurch bereitgestellt werden kann, dass das Kraftfahrzeug eine Verbrennungsmaschine und ein Fliehkraftpendel umfasst. Die Verbrennungsmaschine ist mit dem Fliehkraftpendel gekoppelt. Die Verbrennungsmaschine weist einen ersten Zylinder und wenigstens einen zweiten Zylinder auf. Ferner umfasst die Verbrennungsmaschine einen ersten Betriebszustand, in dem der erste Zylinder und der zweite Zylinder mit Kraftstoff befüllbar sind. In einem zweiten Betriebszustand ist wenigstens einer der beiden Zylinder abgeschaltet. Die Verbrennungsmaschine weist in dem ersten Betriebszustand eine erste Erregerordnung auf. In dem zweiten Betriebszustand weist die Verbrennungsmaschine eine zweite Erregerordnung auf. Die erste Erregerordnung ist dabei unterschiedlich zu der zweiten Erregerordnung. Des Weiteren ist das Fliehkraftpendel wie oben erläutert ausgebildet. Dabei ist die erste Pendelmasse auf die erste Erregerordnung der Verbrennungsmaschine abgestimmt und ausgebildet, die erste Erregerordnung zu dämpfen. Die zweite Pendelmasse des Fliehkraftpendels ist auf die zweite Erregerordnung der Verbrennungsmaschine abgestimmt und ausgebildet, die zweite Erregerordnung der Verbrennungsmaschine zu dämpfen.

Auf diese Weise kann ein besonders leises und kraftstoffarm arbeitendes Antriebssystem bereitgestellt werden, das einen besonders hohen Fahrkomfort aufweist.

Nachfolgend wird die Erfindung anhand von Figuren näher erläutert. Dabei werden gleiche Bauteile mit gleichen Bezugszeichen benannt. Dabei zeigen:

Figur 1 eine schematische Schnittansicht durch ein Antriebssystem 15 mit einem Fliehkraftpendel gemäß einer ersten Ausführungsform;

Figur 2 eine Draufsicht auf das in Figur 1 gezeigte Fliehkraftpendel;

Figur 3 eine Draufsicht auf mehrere Pendelmassen des in Figur 1 gezeigten Fliehkraftpendels;

Figur 4 eine Schnittansicht entlang einer in Figur 3 gezeigten Schnittebene A - A; und

Figur 5 einen schematischen Längsschnitt durch ein Fliehkraftpendel gemäß einer zweiten Ausführungsform.

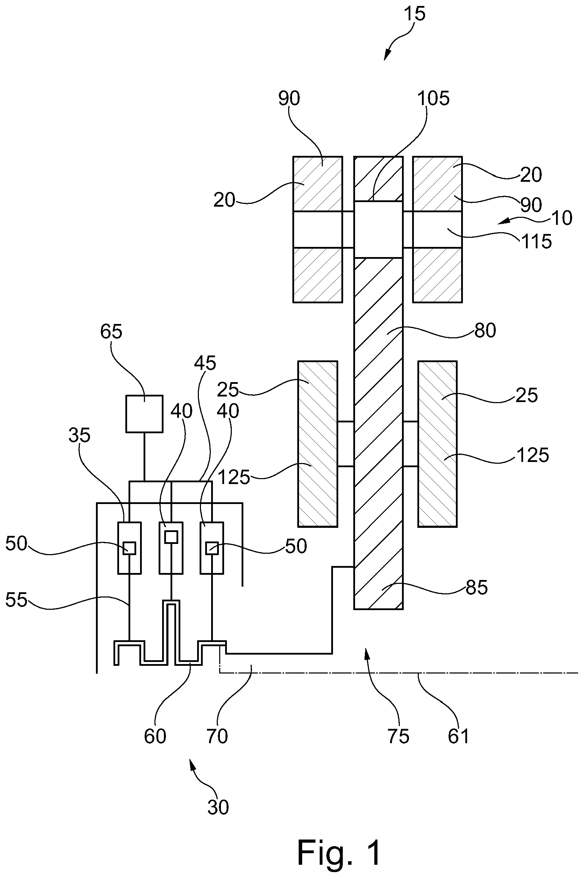

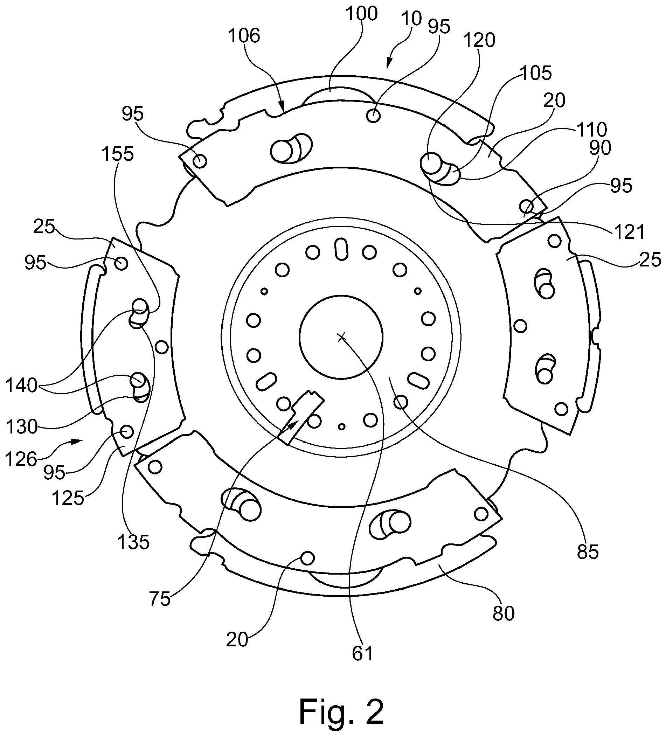

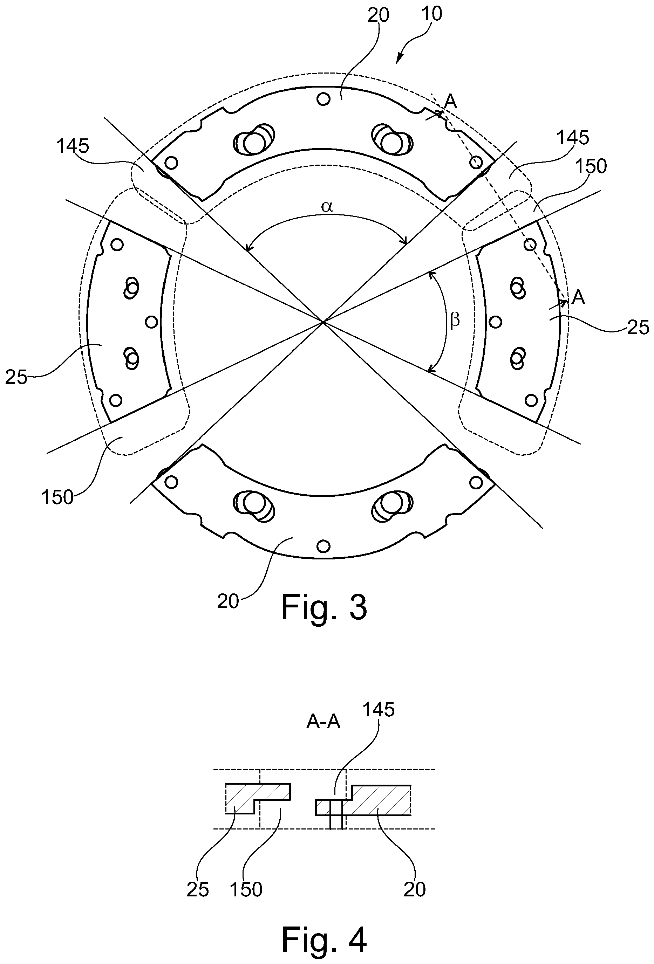

Figur 1 zeigt einen Längsschnitt durch ein Antriebssystem 15 mit einem Fliehkraftpendel 10 gemäß einer ersten Ausführungsform. Figur 2 zeigt eine Draufsicht auf das in Figur 1 gezeigte Fliehkraftpendel 10. Figur 3 zeigt eine Draufsicht auf mehrere Pendelmassen 20, 25 des in Figur 1 gezeigten Fliehkraftpendels. Figur 4 zeigt eine Schnittansicht entlang einer in Figur 3 gezeigten Schnittebene A - A. Nachfolgend sollen die Figuren 1 bis 4 zum besseren Verständnis gemeinsam erläutert werden.

Das Antriebssystem 15 umfasst neben dem Fliehkraftpendel 10 eine Verbrennungsmaschine 30. Die Verbrennungsmaschine 30 weist einen ersten Zylinder 35 und weitere Zylinder 40 auf. Die Zylinder 35, 40 sind mit einem Kraftstoffversorgungssystem 45 der Verbrennungsmaschine 30 verbunden. Das Kraftstoffversorgungssystem 45 ist ausgebildet, Kraftstoff in die einzelnen Zylinder 35, 40 zu fördern. In den Zylindern 35, 40 ist jeweils ein Kolben 50 vorgesehen, wobei die Kolben 50 über Pleuel 55 mit einer Kurbelwelle 60 verbunden sind. Die Kurbelwelle 60 ist drehbar um eine Drehachse 61. Ferner ist ein Steuerungssystem 65 vorgesehen, das ausgebildet ist, einen Verbrennungsvorgang in den Zylindern 35, 40 der Verbrennungsmaschine 30 zu steuern, um ein Drehmoment über die Kurbelwelle 60 an eine Ausgangswelle 70 der Verbrennungsmaschine 30 bereitzustellen. Das Steuerungssystem 65 ist ausgebildet die Verbrennungsmaschine 30 in wenigstens zwei Betriebszuständen zu betreiben. Dabei können alle oder nur ein Teil der Kolben 50 gemäß bekannten Betriebsverfahren für Verbrennungsmaschinen 30 in Bewegung versetzt werden. In einem ersten Betriebszustand werden alle Zylinder 35,40 mit Kraftstoff versorgt, so dass die Verbrennung des Kraftstoffs in allen Zylinder gleichzeitig oder zueinander versetzt erfolgt. In einem zweiten Betriebszustand der Verbrennungsmaschine 30 schaltet die Steuereinrichtung 65 einen der Zylinder 35, 40 ab, so dass nur noch zwei der drei Zylinder 35, 40 über das Kraftstoffversorgungssystem 45 mit Kraftstoff versorgt werden und nur noch in diesen Zylindern 35, 40 eine Verbrennung während des Betriebs der Verbrennungsmaschine 30 stattfindet. In der Ausführungsform wird somit eine Einzelzylinderabschaltung durch die Steuereinrichtung 65 durchgeführt. Selbstverständlich ist auch denkbar, dass die Verbrennungsmaschine 30 eine andersartige als in Figur 2 gezeigte Anzahl von Zylindern 35, 40 aufweist. Dabei ist auch denkbar, dass die Verbrennungsmaschine 30 mehrere Zylinderbänke umfasst, wobei die Steuereinrichtung 65 wenigstens eine der mehreren Zylinderbänke vollständig abschaltet. Dabei ist auch denkbar, dass die abgeschaltete Zylinderbank oder der abgeschaltete einzelne Zylinder 35, 40 vollständig von den übrigen weiteren nach wie vor betriebenen Zylindern entkoppelt wird, um ein Mitlaufen des Zylinders 35 bzw. einer Zylinderbank zu vermeiden. Dadurch kann eine besonders kraftstoffarme Verbrennungsmaschine bereitgestellt werden.

Im ersten Betriebszustand weist die Verbrennungsmaschine 30 eine erste Erregerordnung auf. Im zweiten Betriebszustand weist die Verbrennungsmaschine 30 eine von der ersten Erregerordnung abweichende zweite Erregerordnung auf. Es wird darauf hingewiesen, dass anstatt der Erregerordnung die Verbrennungsmaschine 30 auch mehrere Erregerordnungen bzw. ein Spektrum von Erregerordnungen aufweisen kann.

Die Verbrennungsmaschine 30 ist über eine Ausgangswelle 70 mit einer Eingangsseite 75 verbunden. Die Verbrennungsmaschine 30 stellt an der Ausgangswelle 70 ein Drehmoment bereit, das je nach Betriebszustand der Verbrennungsmaschine 30 eine erste Erregerordnung oder eine zweite Erregerordnung aufweist.

Alternativ ist auch denkbar, dass das Fliehkraftpendel 10 über einen Torsionsschwingungsdämpfer oder eine Reibkupplung mit der Verbrennungsmaschine 30 verbunden ist.

Das Fliehkraftpendel 10 weist einen Pendelflansch 80 auf. Der Pendelflansch 80 ist in der Ausführungsform im Wesentlichen scheibenförmig ausgebildet. Die Eingangsseite 75 weist eine radial innenseitig angeordnete Nabe 85 auf die eine drehmomentfeste Verbindung zu der Ausgangswelle 70 der Verbrennungsmaschine 30 bereitstellt.

Das Fliehkraftpendel 10 weist eine erste Pendelmasse 20 und eine zweite Pendelmasse 25 auf. Die erste Pendelmasse 20 umfasst zwei seitlich des Pendelflanschs 80 angeordnete Pendelmassenteile-90. Die ersten Pendelmassenteile 90 sind über Abstandsbolzen 95 verbunden. Zwischen den beiden Pendelmassenteilen 90 verläuft der Pendelflansch 80. Der Pendelflansch 80 weist dabei einen ersten Ausschnitt 100 und einen zweiten Ausschnitt 105 auf. Durch den ersten Ausschnitt 100 sind die Abstandsbolzen 95 geführt. Zur definierten Festlegung einer Pendelbewegung im Betrieb des Fliehkraftpendels 10 ist für die erste Pendelmasse 20 ein erstes Führungsmittel 106 vorgesehen. Das erste Führungsmittel 106 umfasst den zweiten Ausschnitt 105 mit einer ersten Führungskontur 110 auf. Ferner umfasst das zweite Führungsmittel 106 eine erste Führungsrolle 115. Durch den zweiten Ausschnitt 105 ist die erste Führungsrolle 115 geführt. In den ersten Pendelmassenteile 90 weist das erste Führungsmittel 106 nierenförmig ausgestaltete erste Ausnehmungen 120 auf. Die ersten Ausnehmungen 120 im ersten Pendelmassenteil 90 weisen eine zweite Führungskontur 121 auf. Der zweite Ausschnitt 105, die ersten Ausnehmung 120 sowie die Führungsrolle 115 dienen als Führungsmittel. Dabei durchgreift die erste Führungsrolle 115 sowohl den zweiten Ausschnitt 105 als auch die erste Ausnehmungen 120 in den ersten Pendelmassenteilen 90. Die erste Führungsrolle 115 liegt im Betrieb des Fliehkraftpendels 10 an den Führungskonturen 110, 121 an und wird durch diese geführt.

Die zweiten Pendelmassen 25 weisen zweite Pendelmassenteile 125 auf, die ebenso beidseitig des Pendelflanschs 80 angeordnet sind. Die zweiten Pendelmassenteile 125 sind ebenso wie die ersten Pendelmassenteile 90 über Abstandsbolzen 95, die durch die ersten Ausschnitte 100 geführt sind, verbunden. Ferner weisen die zweiten Pendelmassenteile 125 ein zweites Führungsmittel 126 auf. Dafür sind in den Pendelmassenteilen 125 zweite Ausnehmungen 130 vorgesehen. Das zweite Führungsmittel 126 weist im Pendelflansch 80 dritte Ausschnitte 135 auf. Die zweiten Ausnehmungen 130 weisen eine dritte Führungskontur 136 und die dritten Ausschnitte 135 eine vierte Führungskontur 137 auf. Durch die dritten Ausschnitte 135 und die zweiten Ausnehmungen 130 sind für das zweite Führungsmittel 126 zweite Führungsrollen 140 vorgesehen. Die zweite Führungsrolle 140 liegt im Betrieb des Fliehkraftpendels 10 an den dritten und vierten Führungskonturen 136, 137 an und wird durch diese geführt.

Die erste Pendelmasse 20 weist gegenüber der zweiten Pendelmasse 25 eine im Wesentlichen identische radiale Erstreckung auf. In der Ausführungsform sind die Pendelmassenteile 90, 125 teilringförmig ausgebildet. Auch sind in axialer Richtung die beiden Pendelmassen 20, 25 im Wesentlichen gleich breit ausgebildet. In Umfangsrichtung weist jedoch die erste Pendelmasse 20 eine Erstreckung auf, die größer ist als eine Erstreckung in Umfangsrichtung der zweiten Pendelmasse 25. Die ersten Pendelmassenteile 90 schließen dabei in Umfangsrichtung einen Winkel $\alpha$ ein. Die zweiten Pendelmassenteile 125 schließen in Umfangsrichtung einen Winkel $\beta$ ein. Die Winkel $\alpha$, $\beta$ sind dabei un-

terschiedlich. Durch die unterschiedlichen Erstreckungen in Umfangsrichtung weist die erste Pendelmasse 20 eine größere Masse auf als die zweite Pendelmasse 25. Setzt man die Masse der ersten Pendelmasse 20 und die Masse der zweiten Pendelmasse 25 in ein Verhältnis, so ist in der Ausführungsform das Verhältnis größer 1.

Wird über die Nabe 85 in dem Pendelflansch 80 ein schwankendes Drehmoment mit einer Erregerordnung eingeleitet, so werden durch das schwankende Drehmoment die Pendelmassen 20, 25 zum Pendeln angeregt. Dabei wird die erste Pendelmasse 20 über das erste Führungsmittel 106 geführt. Dabei begrenzt die Ausgestaltung der Führungskonturen 110, 121 und der ersten Führungsrolle 115 einen ersten Pendelbereich 145 der ersten Pendelmasse 20.

Analog dazu begrenzt das zweite Führungsmittel 126 eine Pendelbewegung der zweiten Pendelmasse 25 und legt somit einen zweiten Pendelbereich 150 der zweiten Pendelmasse 25 fest. In der Ausführungsform sind die Führungskonturen 110, 121, 136, 137 und die Führungsrollen 115, 140 bzw. die Führungsmittel 106, 126 so ausgestaltet, dass die beiden Pendelbereiche 145, 150 sich überlappen.

Alternativ ist auch denkbar, dass die Pendelbereiche 145, 150 durch die Führungsmittel 106, 126 derart begrenzt werden, dass die beiden Pendelbereiche 145, 150 insbesondere in Umfangsrichtung voneinander beabstandet angeordnet sind. Auf diese Weise wird gewährleistet, dass ein Anschlagen der Pendelmassen 20, 25 aneinander vermieden wird. Dadurch kann das Fliehkraftpendel 10 besonders leise über den gesamten Betriebsbereich ausgebildet werden.

Auch ist denkbar, dass die Pendelbereiche 145, 150 zumindest teilweise durch ein Abschlagen der Abstandsbolzen 90 an die ersten Ausschnitte 100 begrenzt werden

Die überlappende Anordnung der Pendelbereiche 145, 150 hat in der Ausführungsform den Vorteil, dass die Erstreckung in Umfangrichtung der Pendelmassen 20, 25 besonders groß gewählt werden kann. Dadurch können besonders hohe Amplituden in der Erregerordnung durch die Pendelmassen 20, 25 gedämpft werden, so dass das Fliehkraftpendel 10 mit einem geringen Bauraumbedarf auch an drehmomentstarken Verbrennungsmaschine 30 betrieben werden kann.

Das Grundprinzip eines Fliehkraftpendels 10 beruht darauf, dass die Pendelmasse 20, 25 als ein Pendel mit dem Pendelflansch 80 verknüpft ist. Da die Pendelmasse 20, 25 sich im Fliehkraftfeld befindet, steigt seine Eigenfrequenz proportional zur Drehzahl. Eine Auslegung der Pendelgeometrie macht es möglich, die Eigenfrequenz des Pendels immer einer Motordrehzahlordnung gleich zu halten. Dafür wird der Begriff Tilgerordnung verwendet. Die Tilgerordnung ist $q = \sqrt{L/l}$, wobei I die Pendellänge oder der Krümmungsradius einer Pendelbahn im wellenfesten Koordinatensystem ist und L der Abstand des Krümmungszentrums dieser Laufbahn zu der Drehachse 61. Eine Tilgerordnung q wird auf Basis der Motordrehzahlordnungen k in Abhängigkeit von der Anzahl der Motorzylinder abgestimmt. Beispielweise soll für einen Vierzylinder-Motor q = 2 sein und für einen Achtzylindermotor q=4.

In der Ausführungsform sind die Führungsmittel 106 ausgebildet, so dass, wenn die Pendelmassen 20, 25 in Schwingung versetzt werden, die Pendelmassen 20, 25 eine unterschiedliche Pendelbahn korrespondierend zu den unterschiedlichen Massen der Pendelmassen 20, 25 aufweisen und entlang der Pendelbahn geführt werden. Dadurch können unterschiedliche Tilgerordnungen q durch das Fliehkraftpendel 10 gedämpft werden. Dabei sind die Tilgerordnungen q der Pendelmassen 20, 25 und deren Führungsmittel 106, 126 so gewählt, dass die Pendelmassenteile 90, 125 im Betrieb des Fliehkraftpendels 10 nicht aneinander anschlagen.

Exemplarisch ist in der Ausführungsform das Fliehkraftpendel 10 auf einen V8-Motor abgestimmt. Dazu sind zwei erste Pendelmassen 20 gegenüberliegend am Pendelflansch angeordnet, wobei die zweiten Pendelmassen 25 zwischen den ersten Pendelmassen 20 ebenso gegenüberliegend am Pendelflansch 80 angeordnet sind. Somit sind in Umfangsrichtung abwechselnd die ersten und die zweiten Pendelmassen 20, 25 angeordnet.

Für einen Vierzylinderbetrieb mit der ersten Erregerordnung ist eine erste Tilgerordnung q=2. Diese Tilgerordnung erfordert längere erste bzw. zweite Führungskonturen 110, 121 und eine größere Masse der Pendelmasse 20 als für eine höhere Tilgerordnung q=4, auf die die zweite Pendelmasse 25 und dritte bzw. vierte Führungskonturen 136, 137 abgestimmt sind. Die zweiten leichteren Pendelmassen 25 und die zweiten Führungsmittel 126 sind ausgebildet, im Achtzylinderbetrieb der Verbrennungsmaschine 30 die zweite Erregerordnung mit der Tilgerordnungen q= 4 zu dämpfen.

Selbstverständlich ist auch denkbar, dass die Pendelmassen 20, 25 bzw. die Pendelmassenteile 95, 125 im Wesentlichen identisch ausgebildet sind. Dabei können jedoch die Führungsmittel 106, 126 insbesondere die Führungskonturen 110, 121, 136, 137 unterschiedlich ausgebildet sein, so dass die im Wesentlichen gleich schweren Pendelmassenteile 90, 125 der Pendelmassen 20, 25 auf unterschiedlichen Pendelbahnen geführt werden. Auf diese Weise kann ein kostengünstiges Fliehkraftpendel 10 bereitgestellt werden, wobei die Pendelmassen 20, 25 unterschiedliche Tilgerordnungen q aufweisen. Diese Ausgestaltung eignet sich insbesondere dann, wenn die Erregerordnungen und die darauf abgestimmten Tilgerordnungen sehr nahe beieinander liegen. Dies ist von besonderer Relevanz bei Verbrennungsmaschinen 30 mit Einzelzylinderabschaltung, da die Tilgerordnungen, die durch die Pendelmassen 20, 25 gedämpft werden sollen, eng beieinander liegen. So ist beispielsweise denkbar, bei einem Sechszylindermotor einen einzelnen Zylinder abzuschalten, so dass die ersten Pendelmassen 20 eine Tilgerordnung q = 3 und die zweiten Pendelmassen 25 eine Tilgerordnung q = 2,5 aufweisen.

Als besonders vorteilhaft hat sich herausgestellt, dass ein Verhältnis der Masse der erste Pendelmasse 20 zu der Masse der zweiten Pendelmasse 25 größer 1, vorzugsweise 1,2 bis 3, insbesondere vorzugsweise 1,5 bis 2,5, besonders vorteilhafterweise 1,7 bis 2,3, insbesondere besondere vorzugsweise 2, ist. Das Massenverhältnis der Pendelmassen 20, 25 zueinander kann auch auf ein Verhältnis der Erstreckung der ersten Pendelmasse 20 in Umfangsrichtung und/oder in axialer Richtung zu der Erstreckung zweiten Pendelmasse 25 in Umfangsrichtung und/oder in axialer Richtung übertragen werden, wobei unterschiedliche Tilgerordnungen q bereitgestellt werden, wenn das Verhältnis der Erstreckungen größer 1, vorzugsweise 1,2 bis 3, insbesondere vorzugsweise 1,5 bis 2,5, besonders vorteilhafterweise 1,7 bis 2,3, insbesondere besondere vorzugsweise 2, ist.

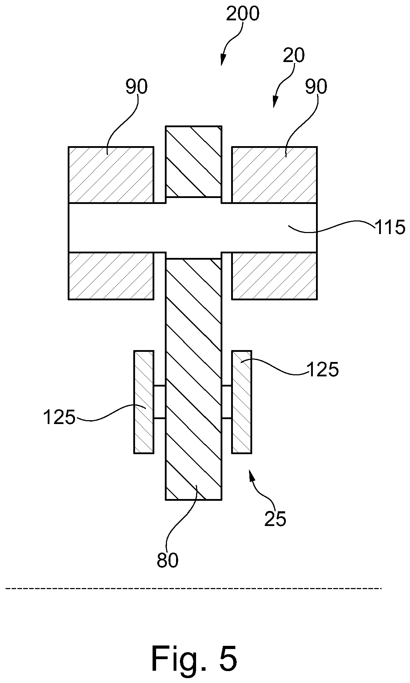

Figur 5 zeigt einen Längsschnitt durch einen Fliehkraftpendel 200 gemäß einer zweiten Ausführungsform. Das Fliehkraftpendel 200 ist im Wesentlichen identisch zu dem in den Figuren 1 bis 3 gezeigten Fliehkraftpendel ausgebildet. Abweichend dazu weisen die Pendelmassenteile 90, 125 jeweils eine unterschiedliche Breite in axialer Richtung, also in Richtung der Drehachse 61, auf. Auf diese Weise kann bei beschränktem radialen Bauraum die Masse der ersten Pendelmasse 20 optimal an die durch die erste Pendelmasse 20 zu dämpfende Tilgerordnung q angepasst werden. Selbiges gilt auch für die zweite Pendelmasse 25. Durch die Variation der axialen Erstreckung der Pendelmassenteile 90, 125 kann das Fliehkraftpendel 200 kostengünstig und einfach in seinen Tilgerordnungen q an die Erregerordnungen der Verbrennungsmaschine 30 angepasst werden.

Selbstverständlich ist auch denkbar, dass bei der in Figur 5 gezeigten Ausführungsform zusätzlich oder alternativ die ersten Pendelmassenteile 90 eine größere radiale Erstreckung aufweisen als die zweiten Pendelmassenteile 125. Durch die axiale unterschiedliche Breite ist aber auch denkbar, dass in Umfangsrichtung und in radialer Richtung die ersten Pendelmassenteile 90 und die zweiten Pendelmassenteile 125 identisch ausgebildet sind, da die Massenvariation über die unterschiedliche axiale Erstreckung bereitgestellt werden kann.

Um eine kostengünstige Herstellung der Pendelmassen 20, 25 bereitzustellen, ist beispielsweise auch denkbar, die Pendelmassen 20, 25 in ein einem Stanzverfahren aus einem Blech herzustellen. Dabei ist auch denkbar, dass die ersten oder zweiten Pendelmassenteile 90,125 mehrere übereinander geschichtete Bleche aufweisen, um so kostengünstig und einfach die gewünschte axiale Erstreckung und somit die gewünschte Masse der Pendelmassenteile 90, 125 zu erreichen.

**Bezugszeichenliste**

| | |
|---|---|
| 10 | Fliehkraftpendel |
| 15 | Antriebssystem |
| 20 | Erste Pendelmasse |
| 25 | Zweite Pendelmasse |
| 30 | Verbrennungsmaschine |
| 35 | Zylinder |
| 40 | Weitere Zylinder |
| 45 | Kraftstoffversorgungssystem |
| 50 | Kolben |
| 55 | Pleuel |
| 60 | Kurbelwelle |
| 61 | Drehachse |
| 65 | Steuereinrichtung |
| 70 | Ausgangswelle |
| 75 | Eingangsseite |
| 80 | Pendelflansch |
| 85 | Nabe |
| 90 | Erste Pendelmassenteile |
| 95 | Abstandsbolzen |
| 100 | Erster Ausschnitt |
| 105 | Zweiter Ausschnitt |
| 106 | Erstes Führungsmittel |
| 110 | Erste Führungskontur |
| 115 | Erste Führungsrolle |
| 120 | Erste Ausnehmung im ersten Pendelmassenteil |
| 121 | Zweite Führungskontur |
| 125 | Zweite Pendelmassenteile |
| 126 | Zweites Führungsmittel |
| 130 | Ausnehmung im zweiten Pendelmassenteil |
| 135 | Dritter Ausschnitt |
| 136 | Dritte Führungskontur |
| 137 | Vierte Führungskontur |
| 140 | Zweite Führungsrolle |
| 145 | Erster Pendelbereich |
| 150 | Zweiter Pendelbereich |
| 200 | Fliehkraftpendel |

**Patentansprüche**

1. Fliehkraftpendel (10) zur Dämpfung einer Torsionsschwingung einer Verbrennungsmaschine (30) mit einer ersten Pendelmasse (20), einer zweiten Pendelmasse (25) und einem Pendelflansch (80),

   - wobei der Pendelflansch (80) mit der Verbrennungsmaschine (30) koppelbar ist,
   - wobei die erste Pendelmasse (20) und die zweite Pendelmasse (25) zur Durchführung einer vordefinierten Pendelbewegung beweglich mit dem Pendelflansch (80) gekoppelt sind, wobei
   - die erste Pendelmasse (20) eine erste Tilgerordnung aufweist und ausgebildet ist, eine in den Pendelflansch (80) einleitbare erste Erregerordnung der Verbrennungsmaschine (30) zu dämpfen,
   - wobei die zweite Pendelmasse (25) eine zweite Tilgerordnung aufweist und ausgebildet ist, eine in den Pendelflansch (80) einleitbare zweite Erregerordnung der Verbrennungsmaschine (30) zu dämpfen,

- wobei die Tilgerordnungen der Pendelmassen (20, 25) unterschiedlich zueinander sind wobei
- eine Masse der ersten Pendelmasse (20) unterschiedlich zu einer Masse der zweiten Pendelmasse (25) ist, **dadurch gekennzeichnet, dass**
- ein Verhältnis der Masse der erste Pendelmasse (20) zu der Masse der zweiten Pendelmasse (25) 1,5 bis 2,5 ist.

2. Fliehkraftpendel (10) nach Anspruch 1, **dadurch kennzeichnet, dass** die erste Pendelmasse (20) unterschiedlich zur zweiten Pendelmasse (25) ausgebildet ist.

3. Fliehkraftpendel (10) nach Anspruch 1 oder 2, **dadurch gekennzeichnet, dass** ein erstes Führungsmittel (106) vorgesehen ist, das mit der ersten Pendelmasse (20) verbunden ist,

   - wobei das erste Führungsmittel (106) ausgebildet ist, die erste Pendelmasse (20) in einer Pendelbewegung zu führen und einen ersten Pendelbereich (145) der ersten Pendelmasse (20) zu begrenzen,
   - wobei ein zweites Führungsmittel (126) vorgesehen ist, das mit der zweiten Pendelmasse (25) verbunden ist,
   - wobei das zweite Führungsmittel (126) ausgebildet ist, die zweite Pendelmasse (25) in der Pendelbewegung zu führen und einen zweiten Pendelbereich (150) zu begrenzen,
   - wobei der erste Pendelbereich (145) mit dem zweiten Pendelbereich (50) der zweiten Pendelmasse (25) überlappt oder
   - wobei der erste Pendelbereich (145) zu dem zweiten Pendelbereich (145), vorzugsweise in Umfangsrichtung, beabstandet angeordnet ist.

4. Fliehkraftpendel (10) nach einem der Ansprüche 1 bis 3, **dadurch gekennzeichnet, dass** die erste Pendelmasse (20) eine erste umfangsseitige Erstreckung aufweist, wobei die zweite Pendelmasse (25) eine zweite umfangsseitige Erstreckung aufweist, wobei die erste Erstreckung von der zweiten Erstreckung unterschiedlich ist.

5. Fliehkraftpendel (10) nach Anspruch 1, **dadurch gekennzeichnet, dass** das Verhältnis der Masse der erste Pendelmasse (20) zu der Masse der zweiten Pendelmasse (25) besonders vorteilhafterweise 1,7 bis 2,3, insbesondere besondere vorzugsweise 2, ist.

6. Fliehkraftpendel (10) nach einem der Ansprüche 1 bis 5, **dadurch gekennzeichnet, dass** eine Erstreckung der ersten Pendelmasse (20) in Umfangsrichtung und/oder in axialer Richtung unterschiedlich zu einer Erstreckung zweiten Pendelmasse (25) in Umfangsrichtung und/oder in axialer Richtung ist.

7. Fliehkraftpendel (10) nach Anspruch 6, **dadurch gekennzeichnet, dass** das Verhältnis der Erstreckung der ersten Pendelmasse (20) in Umfangsrichtung und/oder in axialer Richtung zu der Erstreckung zweiten Pendelmasse (25) in Umfangsrichtung und/oder in axialer Richtung größer 1, vorzugsweise 1,2 bis 3, insbesondere vorzugsweise 1,5 bis 2,5, besonders vorteilhafterweise 1,7 bis 2,3, insbesondere besondere vorzugsweise 2, ist.

8. Antriebssystem für ein Kraftfahrzeug mit einer Verbrennungsmaschine (30) und einem Fliehkraftpendel (10), wobei die Verbrennungswelle mit dem Fliehkraftpendel (10) gekoppelt ist,

   - wobei die Verbrennungsmaschine (30) einen ersten Zylinder (35) und wenigstens einen zweiten Zylinder (40) aufweist,
   - wobei in einem ersten Betriebszustand der erste Zylinder (35) und der zweite Zylinder (40) mit Kraftstoff befüllbar sind,
   - wobei in einem zweiten Betriebszustand wenigstens einer der beiden Zylinder (35, 40) abschaltbar ist,
   - wobei in dem ersten Betriebszustand der Verbrennungsmaschine (30) eine erste Erregerordnung aufweist,
   - wobei in dem zweiten Betriebszustand der Verbrennungsmaschine (30) eine zur ersten Erregerordnung unterschiedliche zweite Erregerordnung aufweist,

   **dadurch gekennzeichnet, dass**

   - das Fliehkraftpendel (10) nach einem der Ansprüche 1 bis 7 ausgebildet ist,
   - wobei die erste Tilgerordnung auf die erste Erregerordnung und die zweite Tilgerordnung auf die zweite Erregerordnung abgestimmt ist.

## Claims

1. Centrifugal force pendulum (10) for damping a torsional vibration of an internal combustion engine (30) with a first pendulum mass (20), a second pendulum mass (25) and a pendulum flange (80),

   - it being possible for the pendulum flange (80) to be coupled to the internal combustion engine (30),

- the first pendulum mass (20) and the second pendulum mass (25) being coupled movably to the pendulum flange (80) in order to carry out a predefined pendulum movement,
- the first pendulum mass (20) having a first damper arrangement and being configured to damp a first excitation order of the internal combustion engine (30), which first excitation order can be introduced into the pendulum flange (80),
- the second pendulum flange (25) having a second damper arrangement and being configured to damp a second excitation order of the internal combustion engine (30), which second excitation order can be introduced into the pendulum flange (80),
- the damper arrangements of the pendulum masses (20, 25) being different from one another,
- a mass of the first pendulum mass (20) being different from a mass of the second pendulum mass (25), **characterized in that**
- a ratio of the mass of the first pendulum mass (20) to the mass of the second pendulum mass (25) is from 1.5 to 2.5.

2. Centrifugal force pendulum (10) according to Claim 1, **characterized in that** the first pendulum mass (20) is of different configuration from the second pendulum mass (25).

3. Centrifugal force pendulum (10) according to Claim 1 or 2, **characterized in that** a first guide means (106) is provided which is connected to the first pendulum mass (20),

    - the first guide means (106) being configured to guide the first pendulum mass (20) in a pendulum movement and to delimit a first pendulum range (145) of the first pendulum mass (20),
    - a second guide means (126) being provided which is connected to the second pendulum mass (25),
    - the second guide means (126) being configured to guide the second pendulum mass (25) in the pendulum movement and to delimit a second pendulum range (150),
    - the first pendulum range (145) overlapping with the second pendulum range (50) of the second pendulum mass (25), or
    - the first pendulum range (145) being arranged spaced apart from the second pendulum range (145), preferably in the circumferential direction.

4. Centrifugal force pendulum (10) according to one of Claims 1 to 3, **characterized in that** the first pendulum mass (20) has a first circumferential-side extent, the second pendulum mass (25) having a second circumferential-side extent, the first extent being different from the second extent.

5. Centrifugal force pendulum (10) according to Claim 1, **characterized in that** the ratio of the mass of the first pendulum mass (20) from the mass of the second pendulum mass (25) is particularly advantageously from 1.7 to 2.3, in particular particularly preferably 2.

6. Centrifugal force pendulum (10) according to one of Claims 1 to 5, **characterized in that** an extent of the first pendulum mass (20) in the circumferential direction and/or in the axial direction is different from an extent of the second pendulum mass (25) in the circumferential direction and/or in the axial direction.

7. Centrifugal force pendulum (10) according to Claim 6, **characterized in that** the ratio of the extent of the first pendulum mass (20) in the circumferential direction and/or in the axial direction to the extent of the second pendulum mass (25) in the circumferential direction and/or in the axial direction is greater than 1, preferably from 1.2 to 3, in particular preferably from 1.5 to 2.5, particularly advantageously from 1.7 to 2.3, in particular particularly preferably 2.

8. Drive system for a motor vehicle having an internal combustion engine (30) and a centrifugal force pendulum (10), the combustion shaft being coupled to the centrifugal force pendulum (10),

    - the internal combustion engine (30) having a first cylinder (35) and at least one second cylinder (40),
    - it being possible for the first cylinder (35) and the second cylinder (40) to be filled with fuel in a first operating state,
    - it being possible for at least one of the two cylinders (35, 40) to be switched off in a second operating state,
    - the internal combustion engine (30) having a first excitation order in the first operating state,
    - the internal combustion engine (30) having a second excitation order in the second operating state which is different from the first excitation order,

    **characterized in that**

    - the centrifugal force pendulum (10) is configured according to one of Claims 1 to 7,
    - the first damper arrangement is tuned to the first excitation order and the second damper arrangement is tuned to the second excitation order.

## Revendications

1. Pendule centrifuge (10) pour amortir les oscillations de torsion d'une machine à combustion (30), comprenant une première masse de pendule (20), une deuxième masse de pendule (25) et une bride de pendule (80),

   - la bride de pendule (80) pouvant être accouplée à la machine à combustion (30),
   - la première masse de pendule (20) et la deuxième masse de pendule (25) étant accouplées à la bride de pendule (80) de manière déplaçable afin d'effectuer un mouvement pendulaire prédéfini,
   - la première masse de pendule (20) présentant un premier ordre d'amortissement et étant réalisée de manière à amortir un premier ordre d'excitation de la machine à combustion (30) pouvant être introduit dans la bride de pendule (80),
   - la deuxième masse de pendule (25) présentant un deuxième ordre d'amortissement et étant réalisée de manière à amortir un deuxième ordre d'excitation de la machine à combustion (30) pouvant être introduit dans la bride de pendule (80),
   - les ordres d'amortissement des masses de pendule (20, 25) étant différents l'un de l'autre,
   - une masse de la première masse de pendule (20) étant différente d'une masse de la deuxième masse de pendule (25), **caractérisé en ce**
   - **qu'**un rapport de la masse de la première masse de pendule (20) à la masse de la deuxième masse de pendule (25) est de 1,5 à 2,5.

2. Pendule centrifuge (10) selon la revendication 1, **caractérisé en ce que** la première masse de pendule (20) est réalisée de manière différente par rapport à la deuxième masse de pendule (25).

3. Pendule centrifuge (10) selon la revendication 1 ou 2, **caractérisé en ce qu'**un premier moyen de guidage (106) est prévu, lequel est raccordé à la première masse de pendule (20),

   - le premier moyen de guidage (106) étant réalisé de manière à guider la première masse de pendule (20) dans un déplacement pendulaire et de manière à limiter une première plage pendulaire (145) de la première masse de pendule (20),
   - un deuxième moyen de guidage (126) étant prévu, lequel est raccordé à la deuxième masse de pendule (25),
   - le deuxième moyen de guidage (126) étant réalisé de manière à guider la deuxième masse de pendule (25) dans un déplacement pendulaire et à limiter une deuxième plage pendulaire (150),
   - la première plage pendulaire (145) chevauchant la deuxième plage pendulaire (50) de la deuxième masse de pendule (25) ou
   - la première plage pendulaire (145) étant disposée à distance de la deuxième plage pendulaire (145), de préférence dans la direction périphérique.

4. Pendule centrifuge (10) selon l'une quelconque des revendications 1 à 3, **caractérisé en ce que** la première masse de pendule (20) présente une première étendue périphérique, la deuxième masse de pendule (25) présente une deuxième étendue périphérique, la première étendue étant différente de la deuxième étendue.

5. Pendule centrifuge (10) selon la revendication 1, **caractérisé en ce que** le rapport de la masse de la première masse de pendule (20) à la masse de la deuxième masse de pendule (25) est particulièrement avantageusement de 1,7 à 2,3, en particulier particulièrement préférablement de 2.

6. Pendule centrifuge (10) selon l'une quelconque des revendications 1 à 5, **caractérisé en ce qu'**une étendue de la première masse de pendule (20) dans la direction périphérique et/ou dans la direction axiale est différente d'une étendue de la deuxième masse de pendule (25) dans la direction périphérique et/ou dans la direction axiale.

7. Pendule centrifuge (10) selon la revendication 6, **caractérisé en ce que** le rapport de l'étendue de la première masse de pendule (20) dans la direction périphérique et/ou dans la direction axiale à l'étendue de la deuxième masse de pendule (25) dans la direction périphérique et/ou dans la direction axiale est supérieur à 1, de préférence est de 1,2 à 3, en particulier de préférence de 1,5 à 2,5, particulièrement avantageusement de 1,7 à 2,3, et particulièrement spécialement préférablement de 2.

8. Système d'entraînement pour un véhicule automobile comprenant une machine à combustion (30) et un pendule centrifuge (10), l'arbre de combustion étant accouplé au pendule centrifuge (10),

   - la machine à combustion (30) présentant un premier cylindre (35) et au moins un deuxième cylindre (40),
   - le premier cylindre (35) et le deuxième cylindre (40), dans un premier état de fonctionnement, pouvant être remplis avec du carburant,
   - au moins l'un des deux cylindres (35, 40), dans un deuxième mode de fonctionnement, pouvant être coupé,
   - présentant un premier ordre d'excitation dans le premier état de fonctionnement de la machine à combustion (30),

- présentant un ordre d'excitation différent du premier ordre d'excitation dans le deuxième état de fonctionnement de la machine à combustion (30),

- **caractérisé en ce que**

- le pendule centrifuge (10) est réalisé selon l'une quelconque des revendications 1 à 7,

- le premier ordre d'amortissement étant adapté au premier ordre d'excitation et le deuxième ordre d'amortissement étant adapté au deuxième ordre d'excitation.

Fig. 1

Fig. 2

Fig. 3

A-A

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009042825 A1
- DE 102009052055 A1
- DE 102012219959 A1